# EUROPEAN PATENT APPLICATION

(11) **EP 1 338 986 A2**
(43) Date of publication of application: **27.08.2003**
(21) Application number: 03250967.1
(22) Date of filing: 18.02.2003
(51) Int. Cl.: G06F 17/30

(54) **Method for dynamically generating integrated graphical displays**

(30) Priority: 18.02.2002 US 78892
(71) Applicant: Vomela Specialty Company, Inc., St. Paul, MI 55107 (US)
(72) Inventor: Walz, Ronald Albin, Brooklyn Park, MI 55443 (US); Degree, David Cameron, Maplewood, MI 55109 (US); Kocon, Lawrence John, Columbia Heights, MI 55421 (US); Canessa, John Charles, St Paul, MN 55121-2482 (US)
(74) Representative: Johnstone, Helen Margaret

(57) **Abstract**

An automated system for dynamically generating customized graphical displays includes computer-executable software stored in one or more execution computers, which execution computers are accessible by a plurality of remote computers through various communication means, the software being programmed to dynamically update graphical data files at desired intervals, and to generate updated and customized graphical displays from the data files upon request from system users. In a particular embodiment, the system is adapted to dynamically update graphical data files by importing update information from one or more remote computers through the communication means, and to subsequently compose customized graphical displays from such updated graphical data.

## Description

### Field of the Invention

The present invention relates to automated graphical display development generally, and more particularly to automated computer systems for dynamically updating graphical displays and methods for automatically generating, printing, and deploying customized and dynamically updated graphical displays.

### Background of the Invention

Graphical displays which illustrate information that is periodically changed or updated are utilized in a wide variety of applications. Such graphical displays subject to change include, for example, information posters, advertising and promotions, decorative graphics, atlases, financial charts, housing and urban development plans, maps, and so on. When such displays are desired for illustrative purposes, new iterations of the display must be generated. Typically, these new iterations involve re-creating the original display completely anew, with any revisions being reflected in the new product.

Such a re-development process requires unnecessary expenditures of time and resources. For example, atlases are generally re-created anew to incorporate changes such as country names. In such a situation, revised atlas versions are commonly produced in limited frequency, due to the expense of re-creating the atlas anew.

A particular application germane to the present invention is the generation of frequently updated graphical displays. Such frequently updated displays presently involve either manually updating a given display version at particular intervals, or completely re-creating the display to incorporate the new information. Traditionally, manual updates have been the preferred mode of incorporating new information on graphical displays due to the prohibitive costs of re-creating new display versions on a relatively frequent basis. Thus, update information is typically distributed in written form for end users to manually amend the original display.

Such an updating process is cumbersome for both display developers and users alike. In response to the inadequacy of such a manual update system, display developers have provided systems for remotely downloading update information through computer networks. Such systems allow remote users to receive particular update information from the display developers through an electronic computer process. In such a manner, the system users are able to receive update information through a convenient electronic media rather than through printed forms.

The systems proposed to date, however, have significant limitations in utility, in that the electronic notices of display updates still require the system users to manually update their respective physical displays. In doing so, potential errors may be introduced in the manual updating process. Furthermore, such a manual updating process requires user interpretation of the received updates, as well as resources in effectuating the manual updates. Thus, manually updating displays is a cumbersome and expensive process that requires extensive user manipulation.

Additionally, some systems require specific software to be purchased and loaded on the remote users' respective computers. In cartographical applications, the specific software purchased is tailored to particular charts covering limited geographical areas, whereby received chart updates are useful only for the geographical area corresponding with the particular software stored in the user's computer. Users of the electronic update information systems are therefore restricted to utilizing information pertinent to the respective geographical areas covered in the users' software, which areas are predetermined by the chart developers.

As a further disadvantage of cartographical systems in use today, system operators are required to input update information into respective data files for subsequent delivery to system subscribers. The data files typically represent the geographical areas corresponding to particular software packages covering respective geographical areas. The method of associating data files with particular groups of recipients inhibits the ability of such data files to cross-communicate information therebetween. Therefore, remote users are limited to information from their respective data files, and have limited capability to poll information from a plurality of data files.

Therefore, it is a principle object of the present invention to provide an automated system for dynamically generating customized graphical displays.

It is another object of the present invention to provide an automated system which allows remote users to create individual customized graphical displays, which displays are dynamically updated on-demand.

A still further object of the present invention is to provide an automated system which allows remote users to create individual customized graphical displays, which displays are automatically and dynamically updated at desired intervals.

Another object of the present invention is to provide a means for automatically creating customized and updated graphical displays in both electronic and physical form.

It is a further object of the present invention to provide an automated system for generating customized graphical displays incorporating dynamically updated information, which system is accessible through a global computer network such as the internet.

Another object of the present invention is to provide an automated system which automatically polls remote source files to dynamically update local data files.

An additional object of the present invention is to provide an automated system through which remote users may direct generation and distribution of customized graphical displays.

A still further object of the present invention is to provide an automated computer system having software stored thereon, which software is programmed to automatically and periodically import update data from remote source files through communication means such as a computer network, and to subsequently update locally stored data files with the update information.

It is a yet further object of the present invention to provide an automated system which automatically oversees an entire graphical display selection generation, composition, manufacture, and distribution process.

### Summary of the Invention

By means of the present invention, a system for automatically and dynamically updating graphical data and generating graphical displays in a computer network environment is provided. Such a system is enabled by storing computer-executable software on one or more computers which are accessible to a plurality of remote computers via communication means. The remote computers are thereby interconnected by such communication means to form a network of computers. The system software is preferably programmed to automatically and dynamically update graphical data files at desired intervals, and to automatically compose and generate customized graphical displays selected from respective graphical data. Further, the system software is preferably programmed to generate electronic or physical graphical displays, and to direct such physical graphical displays to respective recipients.

One embodiment of the graphical display system of the present invention provides a means for automatically and dynamically composing and generating customized graphical displays selected by users from corresponding graphical data. The automated system of the present invention includes computer-executable software stored in one or more execution computers, wherein the execution computers are operably accessible to a plurality of remote computers through communication means. The software is preferably programmed to dynamically update graphical data files at desired intervals, which data files are stored in the respective execution computers. The software is also preferably programmed to generate updated and customized graphical displays from selected data files upon request from system users.

The automated system of the present invention is particularly suitable to compose and generate customized graphical displays including graphical charts, maps, diagrams, posters, advertising and promotional materials, decorative graphics, and other displays. The graphical display system is also preferably programmed to automatically print and administrate shipment of the completed displays to respective recipients.

In preferred embodiments, the graphical display system of the present invention communicates with one or more remote computers to update the graphical data files, whereby the software imports update information from graphic catalog files on the remote computers and integrates such update information into selected graphical source files. In some embodiments, the software automatically and periodically retrieves graphical information from the remote computers through the communication means and subsequently analytically compares the information to the stored source files to dynamically update the source files. The automated system is further configured to compose graphical data selected by the user into discrete graphical files for subsequent generation into customized graphical displays.

The present invention also contemplates a method for dynamically generating customized graphical charts by providing computer-executable software which is storable in one or more execution computers, wherein the execution computers are operably accessible to a plurality of remote computers through various communication means. The software is preferably programmed to automatically and dynamically update graphical electronic data files at desired intervals, including updates on-demand. The software is preferably enabled to communicate with the remote computers via communication means such that update data stored in graphic catalogs in the remote computers may be imported into the execution computers by the software. Upon receipt of graphical information requests from users accessing the system through one or more of the remote computers, the system preferably coallates respective graphical information from the graphic source files into one or more unique and discrete printable files, and thereafter transmits the printable file to a selected local or remote printer to thereby generate the customized graphical display.

In some embodiments of the present invention, the method includes automatically labeling printed copies of the graphical displays for shipment to respective graphical display recipients. The software preferably composes the graphical data into customized graphical displays by automatically retrieving graphical data from one or more dynamically updated data files.

### Brief Description of the Drawings

Figure 1 is a schematic diagram illustrating the relationship between the graphical display system software stored in a plurality of execution computers/servers and associated remote computers.
Figure 2 is a schematic diagram showing the discrete modules or software subroutines comprising the graphical display system of the present invention.
Figure 3 is a detailed schematic diagram illustrating the data flow through the discrete modules or software subroutines comprising the graphical display system of the present invention.

### Detailed Description of the Preferred Embodiment

The objects and advantages enumerated above together with other objects, features, and advances represented by the present invention will now be presented in terms of detailed embodiments described with reference to the attached Figures which are intended to be representative of various possible configurations of the invention. Other embodiments and aspects of the invention are recognized as being within the grasp of those having ordinary skill in the art.

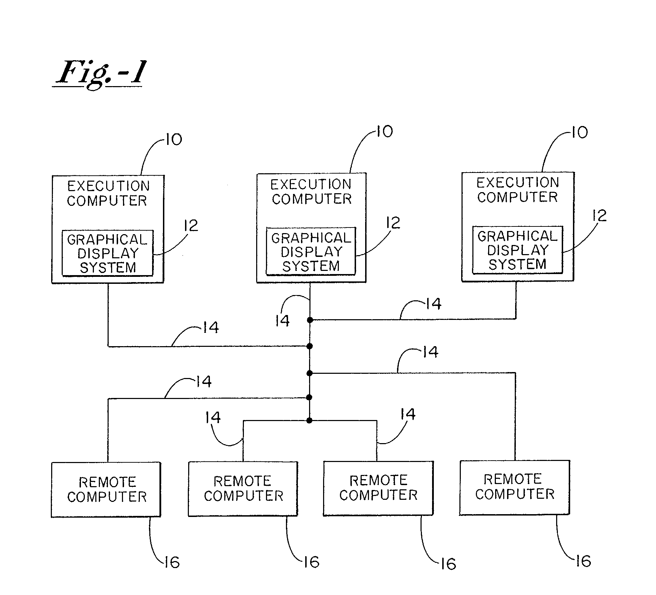

Referring now by characters of reference to the drawings, and first to Figure 1, a schematic drawing is provided illustrating the relationship between remote computers and the graphical display system software stored in one or more execution computers or servers. Execution computers/servers 10 are preferably operably connected to an external computer network via communication means 14, which communication means 14 has the capability to transmit both incoming and outgoing communication. Communication means 14 are preferably operably connected to respective remote computers 16. Examples of preferred communication means 14 include telephone lines, ISDN lines, video cable lines, satellite broadcast systems or any other modes of communication capable of transmitting digital information.

In preferred embodiments, the graphical display system software 12 is physically located and stored on one or more execution computers/servers 10, which computers/servers 10 are accessible from throughout the corresponding network. Preferably, such a network may encompass a global computer network such as the internet. In other embodiments, the graphical display system 12 may service a local network comprising relatively few remote computers, such as in a corporate or enterprise system. Execution computers/servers 10 may be accessed via non-computer means, such as telephones, or any other communication means which may be utilized to access and manipulate digital information. Such communication means may access computers/servers 10 through a global computer network adapted to receive and transmit such communication.

In preferred embodiments of the present invention, a remote user may access the graphical display system 12 through a respective remote computer 16 which is operably coupled to execution computers/servers 10 through communication means 14. While connected to the respective computer network, the user accesses the graphical display system software 12 by requesting a particular network address unique to the graphical display system. The access request is routed to respective computers/servers 10, where a distribution means receives the request and subsequently directs the request to the appropriate location where the graphical display system software 12 resides.

In a particular example of the present invention, a kiosk system is envisioned whereby interactive terminals operably coupled to respective execution computers/servers 10 through communication means 14 are positioned at various locations remote to the execution computers, such that remote users may direct the creation of updated custom displays from the remote kiosk environment. In such a manner, a wide variety of public users have convenient access means to the system of the present invention.

Once the user has access to graphical display system 12, security information such as password and user ID is typically requested of the user to further manipulate graphical display system 12. Upon accessing the graphical display system 12, the remote users have the opportunity to select from a plurality of digital graphic catalogs to compose a desired customized graphical display.

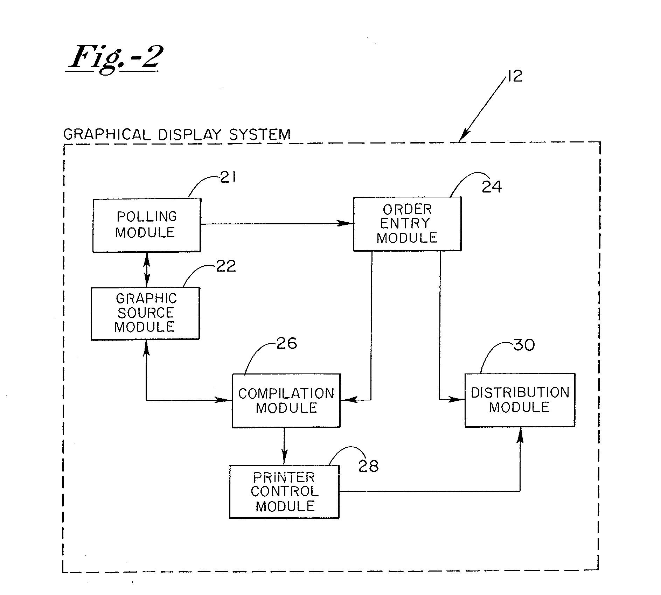

As shown in Figure 2, graphical display system 12 preferably comprises a plurality of distinct software modules which have the capability of operating in combination with, or separately from, one another. In preferred embodiments, each software module is a separable package of instructions which define distinct computer subroutines when integrated with the associated software modules comprising graphical display system 12. In a particularly preferred embodiment, graphical display system 12 includes one or more graphic source modules 22, an order entry module 24, a compilation module 26, a printer control module 28, and a distribution module 30. Such modules may be stored and executed in one or more computers.

Graphic source module 22 contains one or more digital graphic catalogs stored thereon, from which graphic catalogs the users may select desired graphical displays. In preferred embodiments, graphic source module 22 contains a plurality of visual graphic catalogs, thereby storing a variety of graphical displays from which the users may choose. Such graphical displays may include graphical charts, maps, diagrams, posters, promotional materials, and a variety of other graphical displays. The graphical displays may be represented to the user for selection thereof in a variety of formats, including visual graphical displays, textual listings, and other descriptive formats. In some embodiments, users may select portions of data held in distinct graphic catalogs, such that customized graphical displays may be generated. Users may also select desired data from within a particular digital graphic catalog to create such a customized graphical display. The digital graphic catalogs preferably provide users with a plurality of configurational options in generating the customized graphical displays.

In some embodiments of the present invention, a polling module 21 is programmed to automatically poll local and/or remote graphic catalogs 42 from locations internal or external to graphical display system 12 at desired intervals to thereby dynamically update digital graphic source files 44. In other embodiments, graphic source module 22 periodically receives update information from remote graphic catalogs via communication means 14, which update information is automatically integrated into respective graphical source files 44. Preferably, however, the polling module 21 is programmed to automatically import such update data via communication means 14 at predetermined intervals, such that graphic source files 44 may be updated on a regular basis. Such predetermined intervals may be set as a function of time, or may be on-demand to poll source files upon specific system operations.

In some embodiments, polling module 21 polls particular graphic catalogs 42 each instance that a user selects the corresponding baseline data. In such a manner, selected data is updated at the behest of a user requesting generation of a customized graphical display utilizing such data. The selected data is therefore dynamically updated at each user request of such data so that graphical displays utilizing the requested data are assured to incorporate current data.

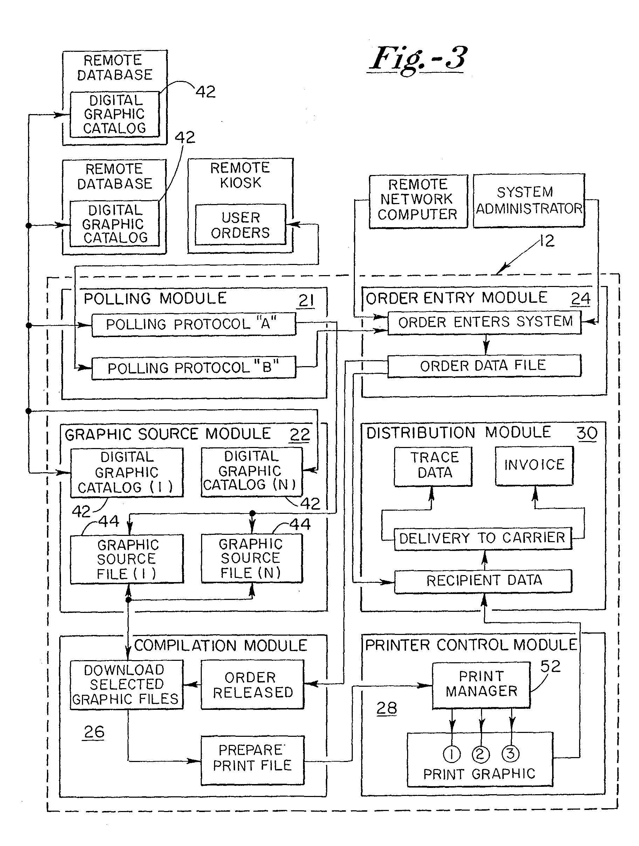

As shown in Figure 3, graphic source module 22 is preferably in operable communication with polling module 21 and compilation module 26. When a desired data set has been composed by graphic source module 22, order entry module 24 enters the user "order" of the composed data set comprising the desired customized graphical display. Order entry module 24 preferably creates a distinct order data file from the entered order, and electronically transmits the order to compilation module 26. Upon receiving the order data file from the order entry module 24, compilation module 26 imports or "downloads" the selected updated graphical data from graphic source module 22. Compilation module 26 preferably receives user instructions such as number of copies desired, graphical display sizes, and shipment address information. Compilation module 26 preferably translates the selected graphical file into a print file of appropriate format for printing. The prepared print file is then delivered to printer control module 28 for printing. Print manager 52 in printer control module 28 receives and interprets the print file from compilation module 26. Print manager 52 is preferably operably coupled to printers, such that electronic transmission of print instructions from print manager 52 directs the respective printers to generate the corresponding graphical displays. Such printers may be local or remote, and print manager 52 preferably automatically directs the print instructions to a desired printer according to user input. The print instructions may contain information pertinent to the users' specific requests such that certain user requests are directed automatically by print manager 52 to predetermined printers. Such user requests may define, for example, particular display materials, sizes, colorants, inks, and finishes.

Once the printing instructions have been sent to the appropriate printers, printer control module 28 transmits information pertinent to labeling to distribution module 30. Distribution module 30 is preferably operably connected to automated shipment information and labeling operations (not shown). Distribution module 30, therefore, acts as a clearinghouse database for shipping information, in that invoices, shipment data, and customer shipment histories may be stored, delivered, and accessed at desired times.

Graphical display system 12 is preferably a self-contained software system which completely automates the graphical display selection and generation process. Further, graphical display system 12 automatically and dynamically updates graphical data such that graphical displays generated by graphical display system 12 reflect current information. In preferred embodiments, polling module 21 automatically and dynamically updates selected graphical data at each instance in which a user orders such graphical data to be composed into a customized graphical display. In other embodiments, polling module 21 automatically imports graphic data at desired intervals to thereby automatically and dynamically update graphic source files 44 stored in respective graphic source modules 22.

As shown in Figure 3, user orders may be entered into graphical display system 12 through a variety of entry means. For example, network users may access graphical display system 12 via communication means 14 which are operably coupled to respective remote network computers. As such, a graphical display order may be communicated from the remote network computer to the graphical display system 12 via communication means 14. User orders may also be entered into the system via a system administrator, which administrator has the capability to locally access graphical display system 12, and to provide system 12 with discrete user orders. In some embodiments, polling module 21 of graphical display system 12 may be operably coupled to one or more remote kiosk systems. Remote users may utilize such kiosks to peruse graphical data files which are part of graphical display system 12, and to order customized graphical displays therefrom. Such remote kiosks may operate much like respective remote network computers 16, in that user orders are unidirectionally delivered to graphical display system 12 for subsequent processing therein. However, a preferred embodiment of the present invention provides polling module 21 with the capability to retrieve user orders stored on respective remote kiosks at desired intervals via communication means 14. Such a capability is illustrated in Figure 3 as polling Protocol B. Orders retrieved by polling module 21 are subsequently directed to order entry module 24 for further processing.

In a particular mode of operation, a user accesses graphical system 12 from a remote computer 16 via communication means 14. The user preferably provides password and user ID information to access graphical display system 12. Once access has been granted, the user selects desired graphical data from one or more digital graphic catalogs 42, which catalogs 42 are preferably programmed in one or more graphic source modules 22. Such catalogs may also or alternatively be stored in databases remote to respective graphic source modules 22.

Preferably, graphical system 12 contains customer-specific stored data, such that customer-specific input parameters may be defined. For example, a user accessing graphical system 12 is preferably provided with specific input parameters which are tailored to applications historically desired by the particular user. The user also preferably has the capability to enter other input parameters different from those initially provided by graphical system 12.

Polling module 21 automatically and dynamically updates the selected graphical data upon entry of the graphical display order in order entry module 24. Such an updating process is illustrated in Figure 3 as being driven by polling protocol A Preferably, the user is then queued to submit information such as number of copies, size of graphical displays, and shipment destination information. Graphical display system 12 is preferably programmed to request method of payment information from the user, as well as to verify credit. Compilation module 26 coallates such information and translates the selected graphical files from graphic source module 22 into an appropriate print file. The print file is then directed to printer control module 28 wherein print manager 52 directs respective printers to generate the corresponding graphical displays. Print manager 52 is preferably programmed to automatically select a desired printer for printing the graphical display, which printer may be local or remote to graphical system 12. Shipment information is then provided to distribution module 30, which directs and instructs packaging and labeling operations accordingly.

A variety of applications are contemplated for the graphical display system of the present invention. In some embodiments, graphical display system 12 may be utilized to automatically and dynamically generate various posters, murals, point of purchase advertising, or other graphical media. Graphical display system 12 is particularly useful in applications where modifications to a baseline set of data are relatively frequently introduced. Further, graphical display system 12 is useful in providing users with given input parameters specific to the particular user, such that templates in a corresponding field of art are provided to the user to customize into a desired format.

In a particular application, graphical display system 12 provides certain users with input parameters related to generating school sports posters, wherein photographs, graphics, and text may be customized into a desired graphical display. In the poster example, the user may select a corresponding school name which automatically imports associated colors and logos into the corresponding graphical display. The user may also select particular organizations (sports teams, clubs, musical groups, etc.) and a desired time period to obtain information regarding event dates. Once all the appropriate information is imported into the user's current catalog page, a customized graphical display may be developed therefrom. This customized graphical display is then automatically generated by graphical display system 12, and directed to an appropriate printer for manufacturing the physical display.

Other examples of graphical display system applications include development of promotional materials, highway and street maps, utility line mapping, resource exploration maps, navigational maps, emergency response information, advertising displays, and other graphical materials, in both electronic and physical form.

Another application is the selection and generation of cartographical displays. Users desiring to obtain current information may use the system of the present invention to compose unique graphical charts which graphically display the desired geographical region. Such cartographical displays may be generated from a remote location, and automatically shipped to a desired location. In particular, such customized graphical charts are automatically and dynamically updated when generated, such that changes to geographical conditions are duly reflected in the generated chart. Such updated charts are particularly useful in that new, updated charts may be custom-designed and developed at any time the user so chooses. Thus, critical current conditions may be obtained at any time, and for any desired geographical region from remote computer terminals operably connected to the respective computer network.

A number of unique advantages are introduced by the graphical display system of the present invention. For example, graphical display system 12 preferably has the capability to allow users to select and generate customized graphical displays from automatically and dynamically updated graphical data. Further, the graphical data stored in graphical display system 12 is automatically and dynamically updated at desired intervals, including at each instance at which respective graphical data is ordered to be composed as a customized graphical display. The graphical display system of the present invention allows users to access the system from remote computers via communication means such as computer networks. In such a manner, no separate software is required to be installed on the users' computers to access and manipulate graphical display system 12. Such a system is desirably expedient and economical to operate.

The graphical display system of the present invention further allows users to generate updated graphical displays at any time, and in any number of duplications. A particular advantage of the present invention is the complete automation of the graphical display selection and generation process. System operator manipulation of the graphical display system of the present invention is therefore not required. In some embodiments, the graphical display system automatically generates the desired output once a particular order has been placed by the user. The system automatically composes data selected by the user into a desired format, and thereafter automatically generates the customized graphical display and preferably manufactures the graphical display into a physical specimen.

The invention has been described herein in considerable detail in order to comply with the patent statutes, and to provide those skilled in the art with the information needed to apply the novel principles and to construct and use embodiments of the invention as required. However, it is to be understood that the invention can be carried out by specifically different device and that various modifications can be accomplished without departing from the scope of the invention itself.

## Claims

1. An automated system for dynamically generating customized graphical displays, comprising:
computer-executable software stored in one or more execution computers, said execution computers being operably accessible by a plurality of remote computers through communication means, said software being programmed to dynamically update graphical data files at desired intervals, which data files are stored in said execution computers, and to automatically generate updated and customized graphical displays from said data files upon selection and request from system users.

2. A system as in Claim 1 wherein said communication means is a global computer network.

3. A system as in Claim 1 wherein the customized graphical displays include graphical charts, maps, and diagrams.

4. A system as in Claim 3 wherein the displays are automatically printed and distributed to desired recipients.

5. A system as in Claim 1 wherein said execution computers communicate with graphical source modules in one or more remote computers to update said graphical data files, whereby said software polls respective said graphical source modules and imports respective update information therefrom to thereby integrate such update information into said graphical data files.

6. A system as in Claim 5 wherein said software automatically and periodically retrieves graphical information from said graphical source modules and analytically compares said graphical information to said stored data files to determine whether updating said stored data files is necessary, and correspondingly dynamically updates said data files when retrieved graphical information does not match said stored data files.

7. A system as in Claim 1 wherein said software automatically and periodically imports updated graphical data and incorporates such updated data into said stored data files to thereby dynamically update said data files.

8. A system as in Claim 1 wherein said software is programmed to dynamically update graphical data files on-demand, such that system operator-defined directive initiate the automated updating process.

9. A computerized method for dynamically generating customized graphical displays, comprising:
(a) providing computer-executable software storable in one or more execution computers, said execution computers being operably accessible to a plurality of remote computers through communication means, said software being programmed to dynamically update graphical electronic data files at desired intervals;
(b) enabling said software to communicate with said remote computers via said communication means such that update data stored in said remote computers may be automatically imported into said execution computers by said software;
(c) receiving graphical information requests via one or more of said remote computers;
(d) composing respective said graphical information into one or more unique and discreet printable files from one or more graphical data files; and
(e) automatically transmitting said printable data file to a printer to thereby generate said graphical display.

10. A computerized method as in Claim 9 wherein said discreet printable files comprise graphical displays.

11. A computerized method as in Claim 10, including automatically labeling and distributing printed copies of said graphical displays for shipment to respective graphical display recipients.

12. A computerized method as in Claim 10 wherein said graphical displays are cartographical charts.

13. A computerized method as in Claim 10 wherein said software composes graphical data into said customized graphical displays by automatically importing respective graphical data from one or more dynamically updated data files.
